# EUROPÄISCHE PATENTSCHRIFT

(11) **EP 3 150 968 B1**
(45) Veröffentlichungstag und Bekanntmachung des Hinweises auf die Patenterteilung: **21.03.2018**
(21) Anmeldenummer: 15188258.6
(22) Anmeldetag: 02.10.2015
(51) Int. Cl.: G01D 5/30, G01D 5/347, G01D 5/34

(54) **OPTOELEKTRONISCHER SENSOR**
OPTOELECTRONIC SENSOR
CAPTEUR OPTOÉLECTRONIQUE

(43) Veröffentlichungstag der Anmeldung: 05.04.2017
(73) Patentinhaber: SICK STEGMANN GmbH, 78166 Donaueschingen (DE)
(72) Erfinder: Hopp, David, 78166 Donaueschingen (DE)
(74) Vertreter: Ludewigt, Christoph

(56) Entgegenhaltungen:
- DE-A1- 3 816 675
- US-A1- 2005 002 032
- US-A1- 2011 233 390

## Beschreibung

Die Erfindung betrifft einen optoelektronischen Sensor, insbesondere zum Erfassen eines Drehwinkels, gemäß dem Oberbegriff des Anspruchs 1.

Viele optische Sensoren, insbesondere optische Drehwinkelsensoren zum Erfassen eines Drehwinkels z. B. einer Welle, bestehen im Wesentlichen aus mindestens einer Lichtquelle, einem Modulator und einem Empfänger.

Die Lichtquelle mit einer ersten Lichtachse sendet Sendelicht in Richtung des Modulators, um den Modulator zu beleuchten. Der Modulator, der insbesondere aus einer Codescheibe besteht, moduliert eine oder mehrere Eigenschaften oder eine räumliche Verteilung des Sendelichts in Abhängigkeit einer zu messenden Größe. Der Modulator mit einer zweiten Lichtachse reflektiert das modulierte Sendelicht als Rücklicht zurück in Richtung des Empfängers, wobei das modulierte Rücklicht Information der zu messenden Größe repräsentiert bzw. beinhaltet. Der Empfänger mit einer dritten Lichtachse detektiert das modulierte Rücklicht, so dass die zu messende Größe elektrisch und/oder elektronisch ausgewertet, aufbereitet und als Signal ausgegeben werden kann.

Hierbei besteht häufig das Problem, dass eine Lichtausbeute, d.h. der Anteil des ausgesendeten Sendelichts des Lichtsenders, der letztlich den Lichtempfänger trifft und zur Signalgenerierung dienen kann, sehr gering ist. Ursache hierfür ist der Einsatz von divergenten Lichtquellen, z.B. LEDs, deren Licht sich unmittelbar nach der Leuchtfläche nur unzureichend bündeln, kollimieren oder gar fokussieren lässt. Dies bedeutet in den meisten Fällen ein sehr ungünstiges Signal-Rausch-Verhältnis und damit eine geringe Signalqualität. Die Auflösung bzw. die Genauigkeit eines solchen Sensors sind dadurch erheblich eingeschränkt.

Ferner spielen mechanische Toleranzen eine große Rolle für viele derartige Sensoren. D.h. eine präzise Anordnung der Komponenten zueinander beeinflusst in hohem Maße die Signalqualität. Hierbei wird meist eine größtmögliche Bewegungsfreiheit des Modulators ohne Beeinträchtigung des Signals angestrebt. Dies bedeutet, dass mechanische Relativbewegungen zwischen den Komponenten nach Möglichkeit keine große Veränderung der Lichtausbeute am Lichtempfänger verursachen sollten.

Werden reflexive Systeme betrachtet, bei welchen Lichtsender und Lichtempfänger bezüglich des Modulators auf derselben Seite angeordnet sind, ergibt sich zusätzlich ein Problem des Bauraums, da Lichtsender und Lichtempfänger geometriebedingt einen gewissen lateralen Mindestabstand zueinander haben müssen.

Um eine höhere Lichtausbeute am Lichtempfänger zu gewährleisten, werden beispielsweise optische Komponenten zur Strahlformung eingesetzt, so dass das Sendelicht des Lichtsenders in Richtung des Modulators gezielt gelenkt wird, von wo es zurück durch eine weitere optische Komponente entsprechend auf dem Lichtempfänger reflektiert wird.

Hierbei durchlaufen die Strahlengänge bzw. die Lichtwege von Beleuchtung und Detektion die optischen Komponenten auf räumlich getrennten Wegen, was häufig auch der Kanaltrennung geschuldet ist. D.h. um ein direktes Übersprechen zwischen dem Lichtsender und dem Lichtempfänger zu vermeiden, sind diese Maßnahmen häufig erforderlich. Hierdurch steht weniger freie Fläche für den Sende- und Empfangsstrahlengang zur Verfügung. Dies wiederum bedeutet eine geringere Lichtausbeute am Lichtempfänger.

Zusätzlich bedeutet die Verwendung räumlich getrennter Lichtwege durch die optischen Komponenten die Notwendigkeit eines geometrisch vorgegebenen Mindestabstands zwischen den Lichtwegen, was der Forderung nach großer mechanischer Bewegungsfreiheit im Wege steht.

Im Speziellen bei reflexiven Systemen führt dieser Mindestabstand häufig zu einem Winkel zwischen den beiden Lichtwegen, welcher beispielsweise eine Abstandstoleranz zum Modulator erheblich einschränkt bzw. auch wieder zu geringerer Lichtausbeute am Lichtempfänger führt.

Ferner erfordert der Aufbau eines reflexiven Systems mit getrennten Lichtwegen eine sehr genaue Positionierung der Komponenten zueinander, so dass erhebliche Produktionskosten entstehen.

US 2011/0233390 A1 offenbart einen optischen Encoder bzw. Sensor mit den Merkmalen des Oberbegriffs des Anspruchs 1, wobei der Lichtsender in einem vorbestimmten Abstand entsprechend einer Brennweite einer maßverkörperungsseitigen Linse zu der Linse angeordnet ist und der Lichtempfänger weiter entfernt zu der maßverkörperungsseitigen Linse als der Lichtsender angeordnet ist. Hierbei können die optische Achse des Lichtsenders mit der optischen Achse der maßverkörperungsseitigen Linse oder die optische Achse des Lichtempfängers mit der optischen Achse der Maßverkörperungsseitigen Linse deckend bzw. koaxial sein.

DE 38 16 675 A1 offenbart eine fotoelektrische Abtastanordnung zur Erfassung der Bewegung von Strichteilungen im Auflichtverfahren, wobei die Anordnung einen Strahler, einen Empfänger und ein Objektiv aufweist. Der Empfänger ist in einer Empfängerebene und der Strahler ist in einer Strahlerebene angeordnet, wobei die Empfängerebene einen größeren Abstand zu dem Objektiv als die Strahlerebene zu dem Objektiv aufweist.

Es ist daher die Aufgabe der Erfindung, einen optoelektronischen Sensor der eingangsgenannten Art derart zu verbessern, dass eine möglichst hohe Lichtausbeute sowie große mechanische Bewegungsfreiheit ermöglicht sind.

Die Aufgabe wird erfindungsgemäß durch einen optoelektronischen Sensor mit den Merkmalen des Anspruchs 1 gelöst.

Der erfindungsgemäße optolektronische Sensor, insbesondere zum Erfassen eines Drehwinkels, umfasst einen Lichtsender, der Sendelicht in eine Sendelichtrichtung abstrahlt und eine erste Lichtachse aufweist, einen Modulator, der das Sendelicht moduliert und als Rücklicht reflektiert und eine zweite Lichtachse aufweist, und einen Lichtempfänger, der das Rücklicht empfängt und eine dritte Lichtachse aufweist, wobei der Modulator drehbar zu dem Lichtsender und dem Lichtempfänger angeordnet ist, der Lichtsender und der Lichtempfänger gegenüber dem Modulator angeordnet sind, und eine Feldlinse mit einer optischen Achse zwischen dem Modulator und den beiden Lichtsender und Lichtempfänger angeordnet ist, und die Feldlinse derart angeordnet ist, dass sich die optische Achse in einem gleichen Abstand jeweils zu der ersten und dritten Lichtachse befindet, und derart zu dem Lichtsender angeordnet ist, dass das Sendelicht durch die Feldlinse kollimiert, insbesondere parallelisiert, ist, wobei eine optische Funktionsfläche des Lichtsenders und eine optische Funktionsfläche des Lichtempfängers sich auf einer selben Ebene befinden.

Gemäß einem bevorzugten Ausführungsbeispiel ist die optische Achse koaxial zu der zweiten Lichtachse.

Gemäß einem weiteren bevorzugten Ausführungsbeispiel ist der Lichtsender in einem Abstand zu der Feldlinse derart angeordnet, dass der Lichtsender die Feldlinse vollständig ausleuchtet.

Gemäß einem weiteren bevorzugten Ausführungsbeispiel weist die Feldlinse eine plankonvexe Form auf und eine Planseite der Feldlinse ist dem Lichtsender und dem Lichtempfänger zugewendet angeordnet.

Gemäß einem weiteren bevorzugten Ausführungsbeispiel weist die Feldlinse refraktive, diffraktive, asphärische, oder achromatische optische Eigenschaften auf.

Der erfindungsgemäße Sensor kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Im Folgenden wird die Erfindung anhand von Ausführungsbeispielen unter Bezugnahme auf die Zeichnungen im Einzelnen erläutert. In den Zeichnungen zeigen:

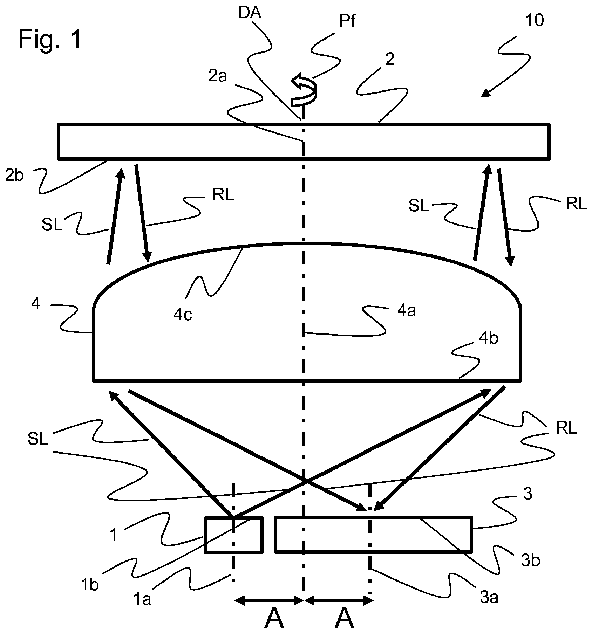

Fig. 1 eine schematische Darstellung eines optoelektronischen Sensors.

In der Figur 1 ist ein optoelektronischer Sensor 10 gezeigt, der insbesondere zur Erfassung eines Drehwinkels einer nicht dargestellten Welle dient, die sich um eine Drehachse DA in Pfeilrichtung Pf dreht. Der Sensor 10 ist drehfest angeordnet und kann die Drehung der Welle in diesem Ausführungsbeispiel bestimmen.

Der Sensor 10 weist einen Lichtsender 1 und einen Lichtempfänger 3 auf, wobei der Lichtsender 1 und der Lichtempfänger 3 gegenüber einem Modulator 2 angeordnet sind, so dass der Sensor 10 erfindungsgemäß auf dem reflexiven Prinzip arbeitet. D.h. der Lichtsender 1 strahlt Sendelicht SL in eine Sendelichtrichtung gegen den Modulator 2 ab, wo das ausgesendete Sendelicht SL vom Modulator 2 moduliert wird und zurück in Richtung des Lichtempfängers 3 als Rücklicht RL reflektiert wird. Der Empfänger 3 empfängt das rückreflektierte Rücklicht RL, so dass insbesondere eine Drehwinkelinformation des mit der nicht dargestellten Welle verdrehfest verbundenen Modulators 2 erfasst, ausgewertet, aufbereitet und als Drehwinkelsignal ausgegeben werden kann.

Der Modulator 3 kann vorzugsweise aus einer Codescheibe bestehen, die das ausgesendete Sendelicht SL flächig beeinflusst bzw. mit der Drehwinkelinformation versieht, wodurch das reflektierte Rücklicht RL die Drehwinkelinformation des Modulators 3 enthält.

Zwischen dem Modulator 3 und den beiden Lichtsender 1 und Lichtempfänger 3 ist erfindungsgemäß eine Feldlinse 4 angeordnet, die eine optische Achse 4a aufweist. Hierbei ist eine Feldlinse 4 im Sinne der Erfindung eine Linse, die eine kurze Brennweite aufweist, das Sendelicht SL vorzugsweise in Richtung des Modulators 2 kollimiert, insbesondere parallelisiert, und das reflektierte Rücklicht RL auf dem Lichtempfänger 3 fokussiert.

Der Lichtsender 1 weist eine erste Lichtachse 1a auf, die in einem Abstand A von der optischen Achse 4a der Feldlinse 4 angeordnet ist. Der Lichtempfänger 3 weist eine dritte Lichtachse 3a auf, die erfindungsgemäß in dem gleichen Abstand A wie die erste Lichtachse 1a des Lichtsenders 1 von der optischen Achse 4a der Feldlinse 4 angeordnet ist. D.h. die Feldlinse 4 ist erfindungsgemäß derart angeordnet, dass sich ihre optische Achse 4a in dem gleichen Abstand A jeweils zu der ersten Lichtachse 1a des Lichtsenders 1 und zu der dritten Lichtachse 3a des Lichtempfängers 3 befindet.

Hierdurch werden einerseits das Sendelicht SL in Richtung des Modulators 2 durch die Feldlinse 4 parallelisiert und andererseits das Rücklicht RL durch die Feldlinse 4 auf den Lichtempfänger 3 fokussiert, wodurch eine hohe Lichtausbeute auf dem Lichtempfänger 3 erzielbar ist.

Der Modulator 2 weist eine zweite Lichtachse 2a auf, die insbesondere koaxial zu der optischen Achse 4a der Feldlinse 4 angeordnet ist, so dass sich der Modulator 2 mit seiner optischen Funktionsfläche 2b insbesondere senkrecht und mittig zu der optischen Achse 4a der Feldlinse 4 befindet.

Vorzugsweise ist der Lichtsender 1 in Richtung des ausgesendeten Sendelichts SL in einem Abstand zu der Feldlinse 4 derart angeordnet, dass der Lichtsender 1 die Feldlinse 4 vollständig ausleuchtet. Der Lichtsender 1 und der Lichtempfänger 3 sind dabei derart zueinander angeordnet, dass sich die optische Funktionsfläche 1b des Lichtsenders 1 und die optische Funktionsfläche 3b des Lichtempfängers 3 auf einer selben Ebene befinden, so dass durch die Anordnung bedingt eine Abbildung des Lichtsenders 1 auf den Lichtempfänger 3 erreichbar ist.

Die Feldlinse 4 weist vorzugsweise eine plankonvexe Form mit einer Planseite 4b und einer Konvexseite 4c auf, wobei die Planseite 4b der Feldlinse 4 dem Lichtsender 1 und dem Lichtempfänger 3 zugewendet angeordnet ist und die Konvexseite 4c der Feldlinse 4 dem Modulator 2 zugewendet angeordnet ist. Hierdurch wird vorteilhafterweise das Sendelicht SL von dem Lichtsender 1 durch die Planseite 4b und die Konvexseite 4c der Feldlinse 4 in Richtung des Modulators 2 gebrochen und kollimiert. Das kollimierte, insbesondere parallelisierte, Rücklicht RL vom Modulator 2 wird durch die Konvexseite 4c in Richtung des Lichtempfängers 3 fokussiert, so dass die hohe Lichtausbeute auf dem Lichtempfänger 3 erreicht ist.

Vorteilhafterweise besteht die Feldlinse 4 aus einer Fresnellinse, wodurch ein kompakterer Aufbau des erfindungsgemäßen Sensors 10 ermöglicht ist. Hierbei ist es vorteilhafterweise möglich, eine plane Oberfläche des gesamten Lichtsender- und Lichtempfängermoduls 1 und 3 zu erzielen, wodurch ein verbessertes Handling und ein verbesserter Schutz gegenüber Verschmutzung oder Beschädigung ermöglicht sind.

Die flächige Ausleuchtung der Feldlinse 4 und damit auch des Modulators 2 bewirkt vorteilhafterweise eine geringere Empfindlichkeit des erfindungsgemäßen Sensors 10 gegenüber lokaler Fehlstellen oder Verschmutzungen, so dass eine verbesserte Signalauswertung ermöglicht ist. Hierbei dient vorteilhafterweise die Feldlinse 4 gleichzeitig als mechanische Schutzabdeckung für den Lichtsender 1 und den Lichtempfänger 3.

Zusätzlich kann die Feldlinse 4 refraktive, diffraktive, asphärische oder achromatische optische Eigenschaften aufweisen, so dass der erfindungsgemäße Sensor 10 beispielweise als Polarisationssensor eingesetzt werden kann.

Ferner kann über einen Durchmesser und die Brennweite der Feldlinse 4 der erfindungsgemäße Sensor 10 skaliert werden. D.h. die Abstände auf der optischen Achse 4a sowie der Durchmesser des Beleuchtungsstrahlengangs können angepasst werden. Z.B. kann eine gewollte Defokussierung des Rücklichts RL auf dem Lichtempfänger 3 durch Änderung des Abstands zwischen der Feldlinse 4 und den beiden Lichtsender 1 und Lichtempfänger 3 erzielt werden, so dass eine unscharfe Abbildung erzwungen wird, welche der Detektion bzw. der Signalqualität zuträglich sein kann.

### Bezuqszeichenliste

- 10: Optoelektronischer Sensor
- 1: Lichtsender
- 1a: Erste Lichtachse
- 1b, 2b, 3b: Optische Funktionsfläche
- 2: Modulator
- 2a: Zweite Lichtachse
- 3: Lichtempfänger
- 3a: Dritte Lichtachse
- 4: Feldlinse
- 4a: Optische Achse
- 4b: Planseite
- 4c: Konvexseite
- A: Abstand
- DA: Drehachse
- Pf: Pfeil der Drehrichtung
- RL: Rücklicht
- SL: Sendelicht

## Patentansprüche

1. Optoelektronischer Sensor (10), insbesondere zum Erfassen eines Drehwinkels, mit
einem Lichtsender (1), der Sendelicht (SL) in eine Sendelichtrichtung abstrahlt und eine erste Lichtachse (1a) aufweist,
einem Modulator (2), der das Sendelicht (SL) moduliert und als Rücklicht (RL) reflektiert und eine zweite Lichtachse (2a) aufweist,
und einem Lichtempfänger (3), der das Rücklicht (RL) empfängt und eine dritte Lichtachse (3a) aufweist,
wobei der Modulator (2) drehbar zu dem Lichtsender (1) und dem Lichtempfänger (3) angeordnet ist, der Lichtsender (1) und der Lichtempfänger (3) gegenüber dem Modulator (2) angeordnet sind, **gekennzeichnet durch** eine Feldlinse (4) mit einer optischen Achse (4a), wobei die Feldlinse (4) zwischen dem Modulator (2) und den beiden Lichtsender (1) und Lichtempfänger (3) angeordnet ist,
und die Feldlinse (4) derart angeordnet ist, dass sich die optische Achse (4a) in einem gleichen Abstand (A) jeweils zu der ersten und dritten Lichtachse (1a, 3a) befindet, und derart zu dem Lichtsender (1) angeordnet ist, dass das Sendelicht (SL) durch die Feldlinse (4) kollimiert, insbesondere parallelisiert, ist,
wobei eine optische Funktionsfläche (1b) des Lichtsenders (1) und eine optische Funktionsfläche (3b) des Lichtempfängers (3) sich auf einer selben Ebene befinden.

2. Optoelektronischer Sensor (10) nach Anspruch 1, **dadurch gekennzeichnet, dass** die optische Achse (4a) koaxial zu der zweiten Lichtachse (2a) ist.

3. Optoelektronischer Sensor (10) nach Anspruch 1 oder 2, **dadurch gekennzeichnet, dass** der Lichtsender (1) in einem Abstand zu der Feldlinse (4) derart angeordnet ist, dass der Lichtsender (1) die Feldlinse (4) vollständig ausleuchtet.

4. Optoelektronischer Sensor (10) nach einem der vorhergehenden Ansprüche, **dadurch gekennzeichnet, dass** die Feldlinse (4) eine plankonvexe Form aufweist und eine Planseite (4b) der Feldlinse (4) dem Lichtsender (1) und dem Lichtempfänger (3) zugewendet angeordnet ist.

5. Optoelektronischer Sensor (10) nach einem der vorhergehenden Ansprüche 1 bis 3, **dadurch gekennzeichnet, dass** die Feldlinse (4) refraktive, diffraktive, asphärische, oder achromatische optische Eigenschaften aufweist.

6. Optoelektronischer Sensor (10) nach einem der vorhergehenden Ansprüche 1 bis 4, **dadurch gekennzeichnet, dass** die Feldlinse (4) aus einer Fresnellinse besteht.

## Claims

1. Optoelectronic sensor (10), in particular for detecting a rotation angle, with a light emitter (1) which emits transmitted light (SL) in a transmitted light direction and has a first light axis (1a),
a modulator (2) which modulates the transmitted light (SL) and reflects as tail light (RL) and has a second light axis (2a), and
a light receiver (3) which receives the tail light (RL) and has a third light axis (3a),
wherein the modulator (2) is rotatable arranged relative to the light emitter (1) and the light receiver (3), the light emitter (1) and the light receiver (3) are arranged opposite the modulator (2), **characterized by** a field lens (4) with an optical axis (4a), wherein the field lens (4) is arranged between the modulator (2) and the two light emitter (1) and light receiver (3),
and the field lens (4) is arranged such that the optical axis (4a) is located at a same distance (A) each to the first and third light axis (1a, 3a), and arranged to the light emitter (1) such that the transmitted light (SL) is collimated, in particular parallelized, by the field lens (4), wherein an optical functional surface (1b) of the light emitter (1) and an optical functional surface (3b) of the light receiver (3) are on the same plane.

2. Optoelectronic sensor (10) according to claim 1, **characterized in that** the optical axis (4a) is co-axial to the second light axis (2a).

3. Optoelectronic sensor (10) according to claim 1 or 2, **characterized in that** the light emitter (1) is arranged to the field lens (4) in a distance such that the light emitter (1) illuminates completely the field lens (4).

4. Optoelectronic sensor (10) according to one of the preceding claims, **characterized in that** the field lens (4) comprises a plano-convex form and a plan side (b) of the field lens (4) is allocated the light emitter (1) and the light receiver (3).

5. Optoelectronic sensor (10) according to one of the preceding claims 1 to 3, **characterized in that** the field lens (4) comprises refractive, diffractive, aspherical or achromatic optical characteristic.

6. Optoelectronic sensor (10) according to one of the preceding claims 1 to 4, **characterized in that** the field lens (4) consists of a Fresnel lens.

## Revendications

1. Capteur optoélectronique (10), en particulier pour détecter un angle de rotation, avec
un émetteur de lumière (1) qui émet une lumière transmise (SL) dans une direction de lumière transmise et possède un premier axe de lumière (1a), un modulateur (2) qui module la lumière transmise (SL) et réfléchie en tant que lumière arrière (RL) et possède un deuxième axe de lumière (2a), et
un récepteur de lumière (3) qui reçoit la lumière arrière (RL) et possède un troisième axe de lumière (3a),
le modulateur (2) est disposé en rotation par rapport à l'émetteur de lumière (1) et le récepteur de lumière (3), l'émetteur de lumière (1) et le récepteur de lumière (3) sont disposés en face du modulateur (2), **caractérisé par** une lentille de champ (4) avec un axe optique (4a), dans lequel la lentille de champ (4) est disposée entre le modulateur (2) et les deux émetteurs de lumière (1) et le récepteur de lumière (3) et la lentille de champ (4) est agencée de telle sorte que l'axe optique (4a) soit situé à une même distance (A) respectivement au premier et troisième axe de lumière (1a, 3a), et est agencée à l'émetteur de lumière (1) de telle sorte que la lumière transmise (SL) soit collimatée, en particulier parallélisée, par la lentille de champ (4), et une surface fonctionnelle optique (1b) de l'émetteur de lumière (1) et une surface fonctionnelle optique (3b) du récepteur de lumière (3) sont sur le même plan.

2. Capteur optoélectronique (10) selon la revendication 1, **caractérisé en ce que** l'axe optique (4a) est coaxial au deuxième axe de lumière (2a).

3. Capteur optoélectronique (10) selon la revendication 1 ou 2, **caractérisé en ce que** l'émetteur de lumière (1) est agencé à la lentille de champ (4) à une distance telle que l'émetteur de lumière (1) éclaire complètement la lentille de champ (4).

4. Capteur optoélectronique (10) selon l'une des revendications précédentes, **caractérisé en ce que** la lentille de champ (4) comporte une forme plano-convexe et un côté plan (b) de la lentille de champ (4) est agencé vers l'émetteur de lumière (1) et le récepteur de lumière (3).

5. Capteur optoélectronique (10) selon l'une des revendications précédentes 1 à 3, **caractérisé en ce que** la lentille de champ (4) comprend une caractéristique réfringent, diffractive, asphérique ou achromatique.

6. Capteur optoélectronique (10) selon l'une des revendications précédentes 1 à 4, **caractérisé en ce que** la lentille de champ (4) est constituée d'une lentille de Fresnel.
